# EUROPEAN PATENT SPECIFICATION

(11) **EP 2 348 149 B1**
(45) Date of publication and mention of the grant of the patent: **29.05.2013**
(21) Application number: 10425014.7
(22) Date of filing: 25.01.2010
(51) Int. Cl.: D06F 37/20

(54) **Pin for mounting the drum dampers of a washing machine**
Stift zur Montage der Trommeldämpfer einer Waschmaschine
Broche pour monter des amortisseurs de tambour d'une machine à laver

(43) Date of publication of application: 27.07.2011
(73) Proprietor: Bonferraro S.p.A., 37060 Bonferraro (VR) (IT)
(72) Inventor: Bicego, Luca, 37060 Bonferraro VR (IT); Gastaldelli, Lucio, 46037 Roncoferraro MN (IT); Tenero, Alberto, 37030 Lavagno VR (IT); Tosi, Mauro, 37051 Bovolone VR (IT)
(74) Representative: Concone, Emanuele

(56) References cited:
- EP-A1- 1 980 661
- WO-A1-98/26197
- WO-A1-2005/118937
- DE-A1-102005 008 239

## Description

The present invention relates to washing machines, and in particular to a pin used for the mounting of the drum dampers.

It is known that in a washing machine the tub containing the drum is connected to the casing of the machine through dampers that are intended to dampen the vibrations caused by the rotation of the drum, in particular, but not only, during the centrifugation phases. More specifically, the dampers are secured between the tub and the casing by means of pins that are introduced in suitable aligned holes formed in mounting portions respectively arranged on the outside of the tub, on the inside of the casing and at the ends of the dampers.

A prior art pin is disclosed, for example, in US 7.373.793 and is illustrated in figures 1 and 2 of the present application, that are inspired by figures 4A and 4B of said document. In practice, the pin consists of a hollow cylindrical body whose front end is closed by an ogival tip while an externally projecting flange is formed at the rear end. In order to provide it with a certain elasticity, a longitudinal cut runs along the pin from close to the front end of the ogival tip down to the rear flange, which however is not cut through its full thickness whereby the pin has circumferential continuity at both ends.

On the side of the pin opposite to the longitudinal cut, in the transition region between the cylindrical body and the ogival tip, there is a U-shaped cut formed longitudinally and facing the tip, whereby the front side of the portion within the U acts as an elastic hinge for bending said portion towards the hollow interior of the pin. The rear part of this portion has an increased thickness projecting outwards, which is connected to the elastic hinge through a longitudinally inclined plane so as to form a detent that enters the pin and then springs back to block it when the pin is pushed through the aligned holes of the mounting portions.

The pin remains therefore blocked, connecting the mounting portions of the tub or casing and of the damper thanks to the bidirectional restraint formed by the rear face of the frontal elastic detent and the front face of the rear flange. It should be noted that in order to assure the maximum stability to the connection and to prevent plays that may cause noisiness, the holes through which the pin is inserted are provided with rubber washers whose internal diameter is equal to or slightly smaller than the external diameter of the pin cylindrical body, which in fact exploits the circumferential elasticity provided by the longitudinal cut to shrink a little during the insertion.

Nonetheless, this prior art pin can not provide a constant performance over time since it can not make up for the wear of the rubber washers that progressively increase in diameter. This results in the onset of a play that during the operation of the washing machine causes vibrations and noisiness and can be eliminated only with a costly replacement of the worn rubber washers.

Other examples of mounting_pins for drum dampers are found in EP 1980661 A1, DE 102005008239 A1 and WO 2005/118937 A1. All these documents disclose pins having a longitudinal cut passing through their full thickness, whereby they do not have circumferential continuity at their rear ends and result too weak to effectively withstand a prolonged load. Separate reinforcement members are provided in the form of an external sleeve in the first document and of an internal core in the other two documents, thus adding to the cost and complexity of manufacturing and installing the pins.

Therefore the object of the present invention is to provide a pin which overcomes the above-mentioned drawbacks. This object is achieved by means of a pin comprising a reinforced segment with an increased external diameter and preferably also a separate core to be introduced therein after the mounting. Other advantageous features of the present pin are specified in the dependent claims.

The main advantage of the pin according to the present invention is that of assuring an adequate recovery of the wear of the rubber washers in order to minimize the play that may arise over time. This results in a lower noisiness of the washing machine while maintaining a great easiness of the mounting operations.

A further advantage of this pin, in its preferred embodiment comprising also the internal core, is the greater certainty of the play recovery and its higher resistance to mechanical stress, thus increasing reliability.

These and other advantages and characteristics of the pin according to the present invention will be clear to those skilled in the art from the following detailed description of two embodiments thereof, with reference to the annexed drawings wherein:

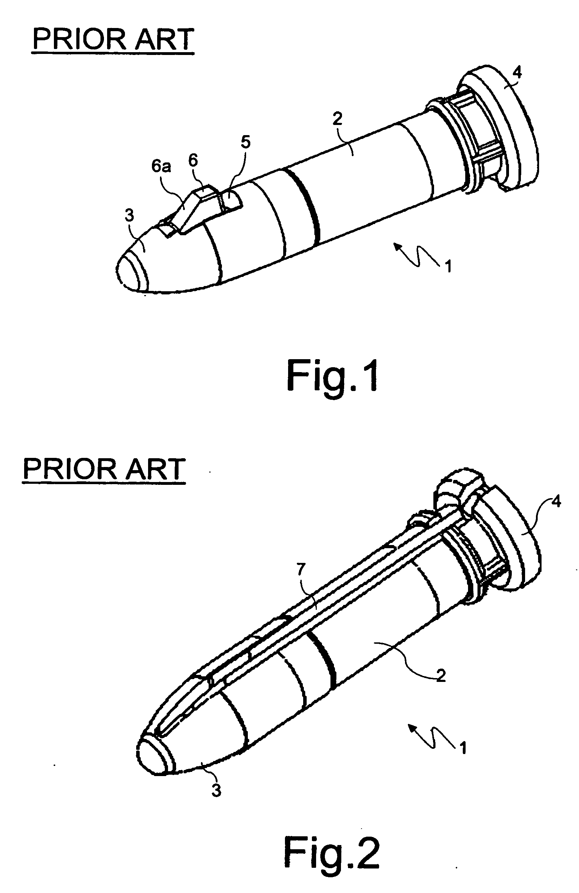

Figs.1, 2 are bottom and top perspective views, respectively, showing a prior art pin;

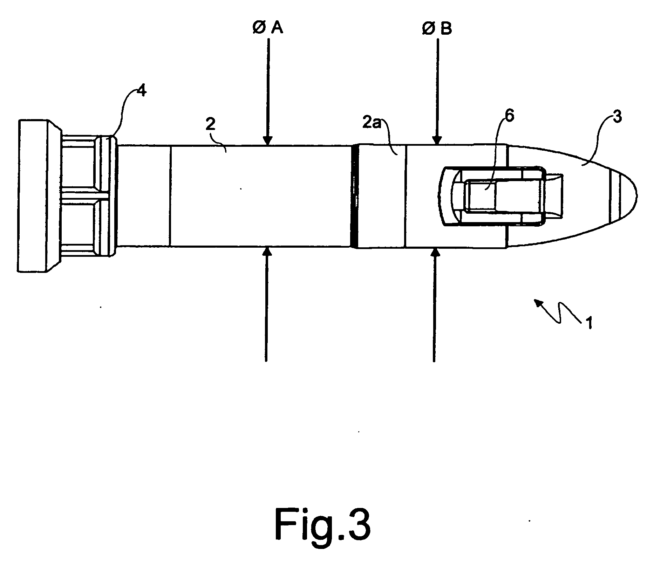

Fig. 3 is a bottom plan view of a first embodiment of the pin according to the invention;

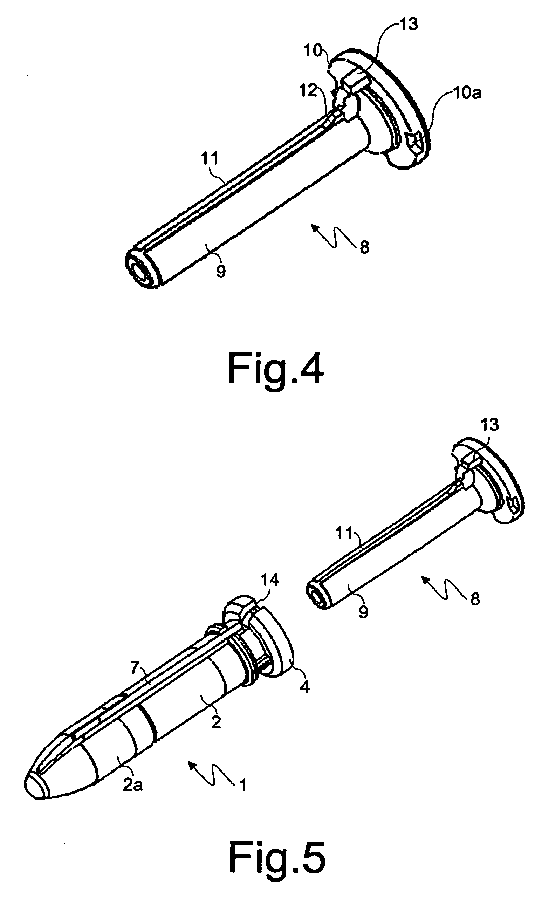

Fig.4 is a top perspective view of a core suitable to be introduced into the pin of Fig.3 in a second embodiment;
Fig.5 is a top perspective view showing the relative position of the pin and core for the introduction of the latter, and

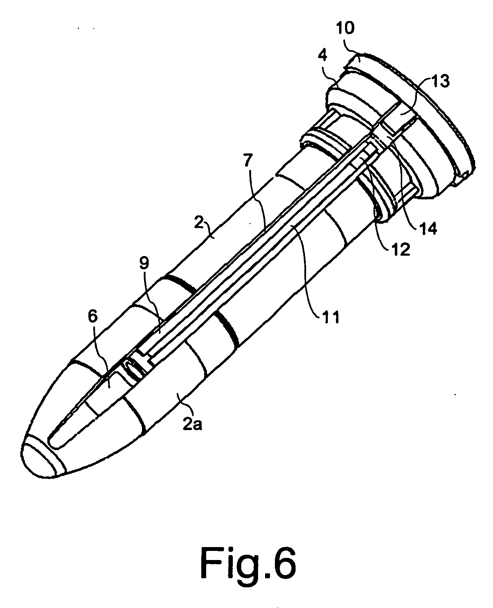

Fig.6 is a top plan view showing the core introduced and blocked in the pin.

Referring to Figs. 1-2, there is illustrated the structure of a prior art pin as previously mentioned. Pin 1 essentially consists of a hollow cylindrical body 2 whose front end is closed by an ogival tip 3 while an externally projecting flange 4 is formed at the rear end. In the transition region between the cylindrical body 2 and the ogival tip 3 there is a U-shaped cut 5 formed longitudinally and facing tip 3. In this way, the front side of the portion of the pin that is inside the U-shaped cut acts as an elastic hinge for bending said portion towards the hollow interior of the pin.

The rear part of this portion has an increased thickness, projecting outwards, which is connected to said elastic hinge through a longitudinally inclined plane 6a so as to form a detent 6 that enters pin 1 when it is pushed through the aligned holes of the mounting portions and then springs back to the rest position to block it when it comes out on the other side.

To provide pin 1 with a certain elasticity in the circumferential direction, which allows it to shrink slightly when passing through the rubber washers, a longitudinal cut 7 runs along pin 1 from close to the front end of the ogival tip 3 down to the rear flange 4, at a diametrically opposite position with respect to detent 6. It should be noted that flange 4 is not cut through its full thickness whereby pin 1 has circumferential continuity at both ends and is more elastic only in the central region.

A first novel aspect of the pin according to the present invention is illustrated in Fig. 3, which clearly shows that between the central region of the cylindrical body 2, having a first external diameter A, and the ogival tip 3 there is formed a reinforced segment 2a having a second external diameter B slightly greater than diameter A, the increase in diameter being indicatively between 3% and 7%, preferably 5%.

In the illustrated embodiment, the increased-diameter segment 2a is equal to about 40% of body 2, i.e. it extends over the whole terminal portion up to tip 3, but it could be even shorter as long as it extends at least up to detent 6. On the other hand, the reinforced segment 2a can not start from before the middle of body 2 otherwise that would be substantially equivalent to having a pin with a diameter greater than required and it would become too difficult to introduce the pin.

In practice, pin 1 according to the present invention retains the easiness of introduction through the rubber washers thanks to the central region of body 2 that has sufficient circumferential elasticity, whereas the reinforced segment 2a allows to achieve an adequate recovery of the play as the rubber washers wear out over time. In fact, although the reinforced segment 2a engages only a part of the mounting portions of the damper and tub or casing, this is sufficient to prevent the onset of vibrations and noisiness.

A second embodiment is now illustrated with reference to figures 4 to 6. This second embodiment includes also an internal core 8 consisting of a cylindrical body 9 provided with an externally projecting rear flange 10, similarly to pin 1. A longitudinal rib 11 runs along the whole body 9 and terminates at the rear with a locking tooth 12, that is shaped as detent 6 of pin 1 but fixed. The rear flange 10 also has on its front face a lug 13, aligned with rib 11, as well as one or more recesses 10a suitable to allow the introduction of a tool tip.

The external diameter of body 9 is equal to the internal diameter of body 2 of pin 1 in the undeformed state, and the rear mouth of the latter has a diameter slightly greater than body 2 to allow the introduction of rib 11 that is narrower than cut 7.

As shown in figures 5 and 6, the introduction of core 8 into pin 1 is achieved by introducing body 9 into the hollow body 2 through alignment of lug 13 with a corresponding notch 14 formed in flange 4, and to this purpose rib 11 is used as a reference for the alignment in the initial phase of the introduction. When core 8 is completely introduced into pin 1, lug 13 is received in notch 14 and tooth 12 blocks core 8 by engaging the front face of flange 4 at cut 7, whereby core 8 is restrained on pin 1 both axially and rotationally.

The length of body 9 is such that its front end reaches at least the middle of the reinforced segment 2a but preferably does not overlap with the elastic detent 6. In this way, even when core 8 is introduced in pin 1 the latter can be removed from the mounting position by pushing detent 6 inwards without having to remove core 8 first (by means of a tool that exploits recess 10a to exert a force suitable to cause the disengagement of tooth 12).

The coupling between core 8 and pin 1 does not only increase the mechanical resistance thereof but also favours the complete recovery of the diameter of the undeformed pin 1, since the circumferential shrinking during the mounting phase may cause a plastic deformation that could result in a premature onset of play when the rubber washers start to wear.

It is clear that the above-described and illustrated embodiments of the pin according to the invention are just examples susceptible of various modifications. In particular, the exact shape and arrangement of the elements could be changed according to specific manufacturing needs, e.g. cut 7 could be formed at a position not diametrically opposite to detent 6, or body 9 could be without rib 11.

## Claims

1. Pin (1) for mounting the drum dampers of a washing machine, comprising a hollow cylindrical body (2) closed at the front end by an ogival tip (3) and provided at the rear end with an externally projecting flange (4), in the transition region between said cylindrical body (2) and said ogival tip (3) there being formed a detent (6) that is elastically bendable towards the interior of the pin (1), a longitudinal cut (7) running along the pin (1) from close to the front end of the ogival tip (3) down to the rear flange (4) that is not cut through its full thickness, **characterized in that** between the central region of the cylindrical body (2) and the ogival tip (3) there is formed a reinforced segment (2a) having an external diameter (B) greater than the external diameter (A) of the cylindrical body (2), said reinforced segment (2a) extending in the half of the cylindrical body (2) towards the ogival tip (3) in longitudinal direction from beyond the middle up to at least said elastic detent (6).

2. A pin (1) according to claim 1, **characterized in that** the increase in diameter in the reinforced segment (2a) ranges between 3% and 7%, preferably 5%.

3. A pin (1) according to claim 1 or 2, **characterized in that** the reinforced segment (2a) extends over the whole terminal portion of the cylindrical body (2) up to the ogival tip (3).

4. A pin (1) according to any of the preceding claims, **characterized in that** it further includes an internal core (8) consisting of a cylindrical body (9) provided with an externally projecting flange (10) at its rear end and with a locking tooth (12) facing backwards and located before said rear flange (10), the external diameter of said cylindrical body (9) being equal to the internal diameter of the cylindrical body (2) of the pin (1) in the undefonmed state and the length of the cylindrical body (9) being such that its front end reaches at least the middle of the reinforced segment (2a).

5. A pin (1) according to the preceding claim, **characterized in that** the rear flange (10) has on its front face a lug (13) aligned with the tooth (12) and suitable to enter a corresponding notch (14) formed in the rear flange (4) of the pin (1), as well as one or more recesses (10a) suitable to allow the introduction of a tool tip.

6. A pin (1) according to the preceding claim, **characterized in that** the cylindrical body (9) has a longitudinal rib (11) aligned with the lug (13) and the rear mouth of the pin (1) has a diameter suitable to allow the introduction of the rib (11) that is narrower than the longitudinal cut (7).

7. A pin (1) according to any of claims 4 to 6, **characterized in that** the length of the cylindrical body (9) is such that it does not overlap with the elastic detent (6).

## Patentansprüche

1. Stift (1) zur Montage der Trommeldämpfer einer Waschmaschine, umfassend einen am vorderen Ende durch eine spitzbogenförmige Spize (3) verschlossenen, hohlzylindrischen Körper (2), der an dem rückwärtigen Ende mit einem außen vorspringenden Flansch (4) versehen ist, wobei in dem Übergangsbereich zwischen dem zylindrischen Körper (2) und der spitzbogenförmigen Spitze (3) eine Sperrklinke (6) ausgeformt ist, die zum Inneren des Stiftes (1) hin elastisch biegbar ist, wobei ein Längsschnitt (7) entlang des Stiftes (1) verläuft von der Nähe des vorderen Endes der spitzbogenförmigen Spitze (3) bis hinab zu dem rückwärtigen Flansch (4), welcher nicht vollständig durch dessen volle Stärke hindurch geschnitten ist, **dadurch gekennzeichnet, dass** zwischen dem zentralen Bereich des zylindrischen Körpers (2) und der spitzbogenförmigen Spitze (3) ein verstärktes Segment (2a) ausgebildet ist mit einem äußeren Durchmesser (B), welcher größer ist als der äußere Durchmesser (A) des zylindrischen Körpers (2), wobei das besagte, verstärkte Segment (2a) sich in der Hälfte des zylindrischen Körpers (2) zu der spitzbogenförmigen Spitze (3) hin erstreckt in Längsrichtung von jenseits der Mitte bis wenigstens zu der elastischen Sperrklinke (6).

2. Stift (1) nach Anspruch 1, **dadurch gekennzeichnet, dass** die Steigerung des Durchmessers in dem verstärkten Segment (2a) zwischen 3% und 7% beträgt, vorzugsweise 5%.

3. Stift (1) nach Anspruch 1 oder 2, **dadurch gekennzeichnet, dass** sich das verstärkte Segment (2a) über den gesamten Endbereich des zylindrischen Körpers (2) bis hin zu der spitzbogenförmigen Spitze (3) erstreckt.

4. Stift (1) nach einem der vorhergehenden Ansprüche, **dadurch gekennzeichnet, dass** er ferner einen inneren Kern (8) umfasst, der aus einem zylindrischen Körper (9) besteht, der an seinem rückwärtigen Ende mit einem außen vorspringenden Flansch (10) versehen ist sowie mit einem nach rückwärts gerichteten Verriegelungszahn (12), der vor dem besagten, rückwärtigen Flansch (10) angeordnet ist, wobei der äußere Durchmesser des zylindrischen Körpers (9) im unverformten Zustand gleich dem inneren Durchmesser des zylindrischen Körpers (2) des Stiftes (1) ist, und wobei die Länge des zylindrischen Körpers (9) derart ist, dass sein vorderes Ende wenigstens die Mitte des verstärkten Segments (2a) erreicht.

5. Stift (1) nach dem vorhergehenden Anspruch, **dadurch gekennzeichnet, dass** der rückwärtige Flansch (10) an seiner Vorderseite einen Vorsprung (13) aufweist, der mit dem Zahn (12) fluchtet und geeignet ist, in eine korrespondierende, in den rückwärtigen Flansch (4) des Stiftes (1) eingeformte Kerbe (14) einzugreifen, sowie ein oder mehrere Ausnehmungen (10a), welche geeignet sind, das Einführen einer Werkzeugspitze zu erlauben.

6. Stift (1) nach dem vorhergehenden Anspruch, **dadurch gekennzeichnet, dass** der zylindrische Körper (9) eine Längsrippe (11) aufweist, die mit dem Vorsprung (13) fluchtet, und dass die rückwärtige Mündung des Stiftes (1) einen geeigneten Durchmesser aufweist, um das Einführen der Rippe (11) zuzulassen, die schmäler ist als der Längsschnitt (7).

7. Stift (1) nach einem der Ansprüche 4 bis 6, **dadurch gekennzeichnet, dass** die Länge des zylindrischen Körpers (9) derart gewählt ist, dass dieser nicht mit der elastischen Sperrklinke (6) überlappt.

## Revendications

1. Broche (1) pour monter les amortisseurs de tambour d'une machine à laver, comprenant un corps cylindrique creux (2) fermé au niveau de l'extrémité avant par une pointe ogivale (3) et prévu à l'extrémité arrière avec une bride faisant saillie extérieurement (4), dans la région de transition entre ledit corps cylindrique (2) et ladite pointe ogivale (3), est formée une détente (6) qui peut être pliée élastiquement vers l'intérieur de la broche (1), une découpe longitudinale (7) s'étendant le long de la broche (1) depuis la proximité de l'extrémité avant de la pointe ogivale (3) et redescendant vers la bride arrière (4) qui n'est pas coupée à travers toute son épaisseur, **caractérisée en ce que** entre la région centrale du corps cylindrique (2) et la pointe ogivale (3), est formé un segment renforcé (2a) ayant un diamètre externe (B) supérieur au diamètre externe (A) du corps cylindrique (2), ledit segment renforcé (2a) s'étendant dans la moitié du corps cylindrique (2) vers la pointe ogivale (3) dans la direction longitudinale depuis le milieu jusqu'à au moins ladite détente élastique (6).

2. Broche (1) selon la revendication 1, **caractérisée en ce que** l'augmentation de diamètre dans le segment renforcé (2a) est comprise entre 3 % et 7 %, de préférence 5 %.

3. Broche (1) selon la revendication 1 ou 2, **caractérisée en ce que** le segment renforcé (2a) s'étend sur toute la partie terminale du corps cylindrique (2) jusqu'à la pointe ogivale (3).

4. Broche (1) selon l'une quelconque des revendications précédentes, **caractérisée en ce qu'**elle comprend en outre un noyau interne (8) se composant d'un corps cylindrique (9) prévu avec une bride faisant saillie vers l'extérieur (10) au niveau de son extrémité arrière et avec une dent de blocage (12) orientée vers l'arrière et positionnée avant ladite bride arrière (10), le diamètre externe dudit corps cylindrique (9) étant égal au diamètre interne du corps cylindrique (2) de la broche (1) à l'état non déformé et la longueur du corps cylindrique (9) étant telle que son extrémité avant atteint au moins le milieu du segment renforcé (2a).

5. Broche (1) selon la revendication précédente, **caractérisée en ce que** la bride arrière (10) a, sur sa face avant, une patte (13) alignée avec la dent (12) et appropriée pour entrer dans une encoche (14) correspondante formée dans la bride arrière (4) de la broche (1), ainsi qu'un ou plusieurs évidements (10a) appropriés pour permettre l'introduction d'une pointe d'outil.

6. Broche (1) selon la revendication précédente, **caractérisée en ce que** le corps cylindrique (9) a une nervure longitudinale (11) alignée avec la patte (13) et l'embouchure arrière de la broche (1) a un diamètre approprié pour permettre l'introduction de la nervure (11) qui est plus étroite que la découpe longitudinale (7).

7. Broche (1) selon l'une quelconque des revendications précédentes 4 à 6, **caractérisée en ce que** la longueur du corps cylindrique (9) est telle qu'elle ne chevauche pas sur la détente élastique (6).
